# EUROPÄISCHE PATENTSCHRIFT

(11) **EP 1 371 129 B1**
(45) Veröffentlichungstag und Bekanntmachung des Hinweises auf die Patenterteilung: **09.02.2005**
(21) Anmeldenummer: 02703387.7
(22) Anmeldetag: 07.03.2002
(51) Int. Cl.: H02M 7/48, H02N 6/00, H02J 3/38, H02M 7/42, H02M 3/158, H02J 7/35, G05F 1/67

(54) **VERFAHREN ZUM REGELN EINES WECHSELRICHTERSYSTEMS**
METHOD FOR REGULATING AN INVERTER SYSTEM
PROCEDE SERVANT A REGLER UN SYSTEME D'INVERSEUR

(30) Priorität: 09.03.2001 AT 3822001
(43) Veröffentlichungstag der Anmeldung: 17.12.2003
(73) Patentinhaber: Fronius International GmbH, 4643 Pettenbach (AT)
(72) Erfinder: ACHLEITNER, Günter, A 4642 Sattledt (AT); PANHUBER, Christoph, A-4060 Leonding (AT)
(74) Vertreter: Secklehner, Günter
(86) Internationale Anmeldenummer: PCT/AT2002/000074
(87) Internationale Veröffentlichungsnummer: WO 2002/078164

(56) Entgegenhaltungen:
- EP-A- 0 780 750
- DE-A- 19 937 410
- LOHNER A ET AL: "A new panel-integratable inverter concept for grid-connected photovoltaic systems" ISIE '96. PROCEEDINGS OF THE IEEE INTERNATIONAL SYMPOSIUM ON INDUSTRIAL ELECTRONICS (CAT. NO.96TH8192), PROCEEDINGS OF IEEE INTERNATIONAL SYMPOSIUM ON INDUSTRIAL ELECTRONICS, WARSAW, POLAND, 17-20 JUNE 1996, Seiten 827-831 vol.2, XP002204662 1996, New York, NY, USA, IEEE, USA ISBN: 0-7803-3334-9 in der Anmeldung erwähnt
- HERRMANN U ET AL: "Low cost DC to AC converter for photovoltaic power conversion in residential applications" PESC '93. RECORD. 24TH ANNUAL IEEE POWER ELECTRONICS SPECIALISTS CONFERENCE (CAT. NO.93CH3293-8), PROCEEDINGS OF IEEE POWER ELECTRONICS SPECIALIST CONFERENCE - PESC '93, SEATTLE, WA, USA, 20-24 JUNE 1993, Seiten 588-594, XP002204663 1993, New York, NY, USA, IEEE, USA ISBN: 0-7803-1243-0

## Beschreibung

Die Erfindung betrifft ein Verfahren zum Regeln eines Wechselrichtersystems sowie einen Wechselrichter hierfür, wie es in den Oberbegriffen der Ansprüche 1 und 18 beschrieben ist.

Aus dem Artikel "A new panel-integratable inverter concept for grid-connected photovoltaic systems" von A. Lohner, T. Meyer und A. Nagel (Department for Power Electronics and Electrical Drivers, RWTH Aachen, University of Technology) ist ein Wechselrichtersystem bekannt, bei dem eine Energiequelle, insbesondere ein Solarmodul, an einem DC-DC-Wandler, der in der Energiequelle bzw. im Solarmodul angeordnet ist, angeschlossen ist. Der DC-DC-Wandler weist einen Serien-Resonanzkreis auf und ist mit einem Zwischenkreis, der aus einem oder mehreren Kondensatoren gebildet ist, verbunden. Am Zwischenkreis ist ein DC-AC-Wandler angeschlossen, wobei der Ausgang des DC-AC-Wandlers mit einem Wechselspannungsnetz zur Energieeinspeisung verbunden ist. Aus dem Artikel ist ein Konzept zu entnehmen, bei dem der DC-DC-Wandler zur Lieferung einer konstanten Leistung und der DC-AC-Wandler zur Lieferung einer pulsierenden Leistung ausgelegt ist. Weiters arbeitet die Energiequelle, insbesondere das Solarmodul, mit Gleichstrom. Im Artikel wird weiters erwähnt, daß ein Nachteil darin besteht, daß durch die konstante Leistungslieferung bzw. konstante Spannungs- bzw. Stromlieferung des DC-DC-Wandlers die Spannungsschwankungen der Energiequelle auf den Zwischenkreis übertragen wird.

In diesem Artikel ist zwar das Grundprinzip einer konstanten Energielieferung von der Energiequelle in den Zwischenkreis erwähnt, jedoch werden keinerlei Anregungen gegeben, wie ein derartiges Wechselrichtersystem betrieben werden muß. Hierzu wird sogar erwähnt, daß dadurch der Nachteil auftritt, daß Spannungsschwankungen im Zwischenkreis auftreten. Wird bei diesem Konzept eine konstante Energielieferung von der Energiequelle über den DC-DC-Wandler mit einem fix eingestellten Strom ohne spezielles Regelverfahren durchgeführt, so kann es passieren, daß ohne entsprechende Regel- bzw. Steuerverfahren zu viel Energie aus dem Zwischenkreis entnommen wird, wodurch das Wechselrichtersystem zum Stillstand kommt bzw. ein definierter Betrieb nicht mehr möglich ist.

Andererseits sind Wechselrichtersysteme bekannt, bei denen der Aufbau dem obengenannten Wechselrichter gleicht. Hierbei wird jedoch ein Verfahren zur Regelung des Wechselrichtersystems eingesetzt, bei dem der DC-DC-Wandler derart geregelt wird, daß dieser einen sinusähnlichen Stromfluß bei konstanter Spannung aufweist. Damit wird erreicht, daß die Zwischenkreisspannung im Zwischenkreis konstant gehalten wird, wobei der sinusähnliche Stromfluß dabei ständig an die Energieentnahme des DC-AC-Wandlers aus dem Zwischenkreis angepaßt wird. Somit wird auch erreicht, daß immer ausreichend Energie vom DC-DC-Wandler in den Zwischenkreis geliefert wird und somit ein Stillstand bzw. ein undefinierbarer Betrieb nicht möglich ist.

Der Erfindung liegt die Aufgabe zugrunde, ein Verfahren zum Regeln eines Wechselrichtersystems sowie einen Wechselrichter hierfür zu schaffen, bei dem eine bewußte Schwankung der Zwischenkreisspannung bzw. der Zwischenkreisenergie in Kauf genommen wird und gleichzeitig ein sicherer Betrieb des Wechselrichters bzw. des Wechselrichtersystems gewährleistet ist.

Diese Aufgabe der Erfindung wird derartig gelöst, daß der DC-DC-Wandler derart geregelt wird, daß dieser während einer einstellbaren Zeitdauer einen annähernd konstanten Stromfluß vom Eingang des DC-DC-Wandlers, also von der Energiequelle, zum Ausgang des DC-DC-Wandlers, also in den Zwischenkreis, unabhängig von der Energieentnahme aus dem Zwischenkreis durchführt, wogegen der DC-AC-Wandler innerhalb dieser Zeitdauer Energie aus dem Zwischenkreis zum Einspeisen in das Wechselspannungsnetz und/oder zur Lieferung an einen Verbraucher entnimmt, wobei ein Regler bzw. eine Steuervorrichtung des DC-DC-Wandlers, insbesondere ein Sollwert für die Regelung des Stromflusses durch den DC-DC-Wandler, jeweils nach Ablauf der Zeitdauer neu eingestellt wird.

Vorteilhaft ist hierbei, daß durch die konstante Stromlieferung bzw. den konstanten Energiefluß über den DC-DC-Wandler die Leitverluste des DC-DC-Wandlers sehr stark reduziert werden können. Dies wird insofern erreicht, da die Leitverluste der eingesetzten Schaltvorrichtungen sich im Quadrat zur Stromhöhe vergrößern, wobei bei dieser Art von Regelung die maximale Stromhöhe wesentlich geringer ist, als dies bei den bekannten Wechselrichtern der Fall ist, da bei einer sinusförmigen Stromlieferung über den DC-DC-Wandler sehr hohe Stromspitzenwerte zur Konstanthaltung des Zwischenkreises auftreten. Die Zeitabschnitte mit hohem Strom bzw. Stromspitzenwerten wirken sich daher überproportional stark aus. Ein weiterer Vorteil liegt darin, daß damit auch erreicht wird, daß keine Spitzenwerte der Verlustleistung auftreten, da die Leitverluste während des Betriebes annähernd konstant bleiben, so daß eine sehr einfache Abführung der Verlustenergie, die in Form von Wärmeenergie auftritt, ermöglicht wird. Bei den aus dem Stand der Technik bekannten Wechselrichtern, bei denen Spitzenverluste auftreten, müssen für die Abführung der Spitzenverluste die entsprechenden Baukörper, insbesondere Kühlkörper, Lüfter, usw., für die maximal möglichen und erlaubten Spitzenverluste bzw. Temperaturen ausgelegt werden, so daß die Baugröße und die Herstellungskosten derartiger Wechselrichter bedeutend höher sind.

Ein wesentlicher Vorteil liegt auch darin, daß trotz konstantem Stromfluß über den DC-DC-Wandler eine Leistungsanpassung der Energielieferung an den Zwischenkreis ohne sehr hohe Stromspitzen durch ein spezielles Regel- bzw. Steuerverfahren vorgenommen werden kann, so daß ein Dauerbetrieb mit einem derartigen Wechselrichter möglich ist. Vorteilhaft ist weiters, daß aufgrund der konstanten Stromentnahme aus der Energiequelle keinerlei Spannungsschwankungen am Eingang des DC-DC-Wandlers verursacht werden, so daß die Eingangskapazitäten der Glättungskondensatoren für die Energiequelle wesentlich verringert werden können. Somit ist auch ein Betrieb am optimalen Arbeitspunkt, insbesondere am MPP-Punkt, der Energiequelle bzw. des Solarmoduls möglich, da keinerlei Spannungsschwankungen auftreten und somit ein unvorhersehbares Verschieben des Arbeitspunktes nicht stattfinden kann. Durch die Regelung des DC-DC-Wandlers mit konstantem Stromfluß wird auch erreicht, daß eine wesentlich geringere maximale Stromhöhe erreicht wird, wodurch wesentlich geringer dimensionierte Bauelemente eingesetzt werden können und somit die Herstellungskosten des DC-DC-Wandlers gesenkt werden können.

Weitere vorteilhafte Maßnahmen sind in den Ansprüchen 2 bis 17 beschrieben. Die sich daraus ergebenden Vorteile sind der Beschreibung zu entnehmen.

Die Erfindung wird anschließend durch ein Ausführungsbeispiel näher beschrieben.

Es zeigen:
- Fig. 1: ein Blockschaltbild eines Wechselrichtersystems mit den wesentlichen Komponenten in vereinfachter, schematischer Darstellung;
- Fig. 2: eine Kennlinie eines Stromverlaufes am Ausgang einer Energiequelle des Wechselrichtersystems in vereinfachter, schematischer Darstellung;
- Fig. 3: eine Kennlinie eines Stromverlaufes am Ausgang eines DC-DC-Wandlers des Wechselrichtersystems in vereinfachter, schematischer Darstellung;
- Fig. 4: eine Kennlinie eines Stromverlaufes am Ausgang eines DC-AC-Wandlers des Wechselrichtersystems in vereinfachter, schematischer Darstellung;
- Fig. 5: eine Kennlinie einer Zwischenkreisspannung im Zwischenkreis des Wechselrichtersystems in vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

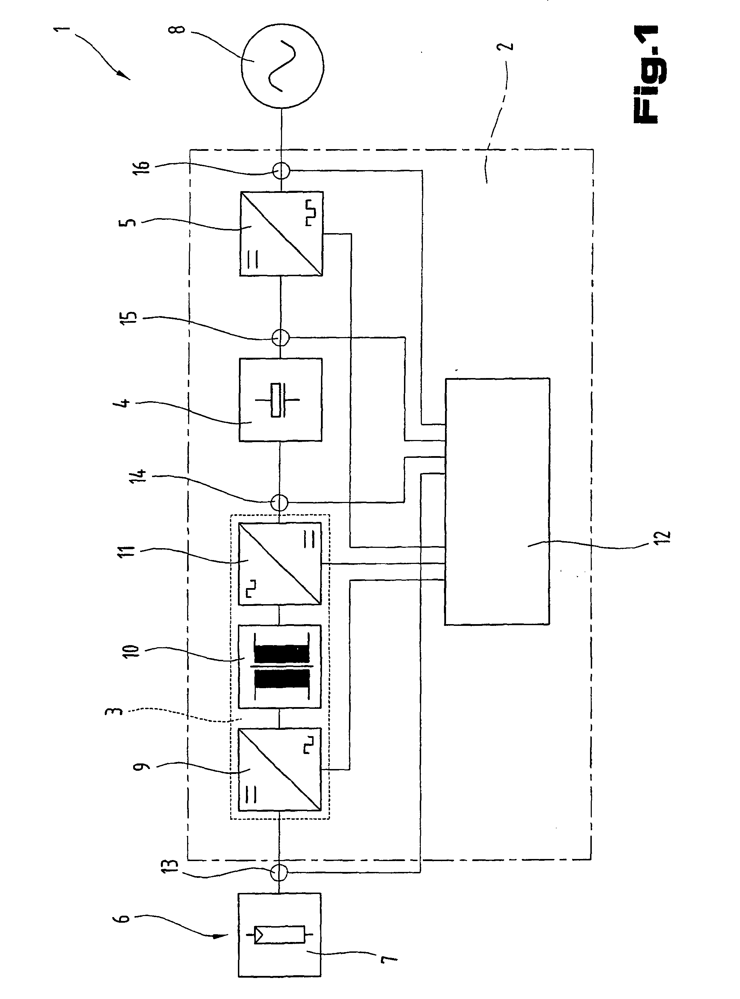

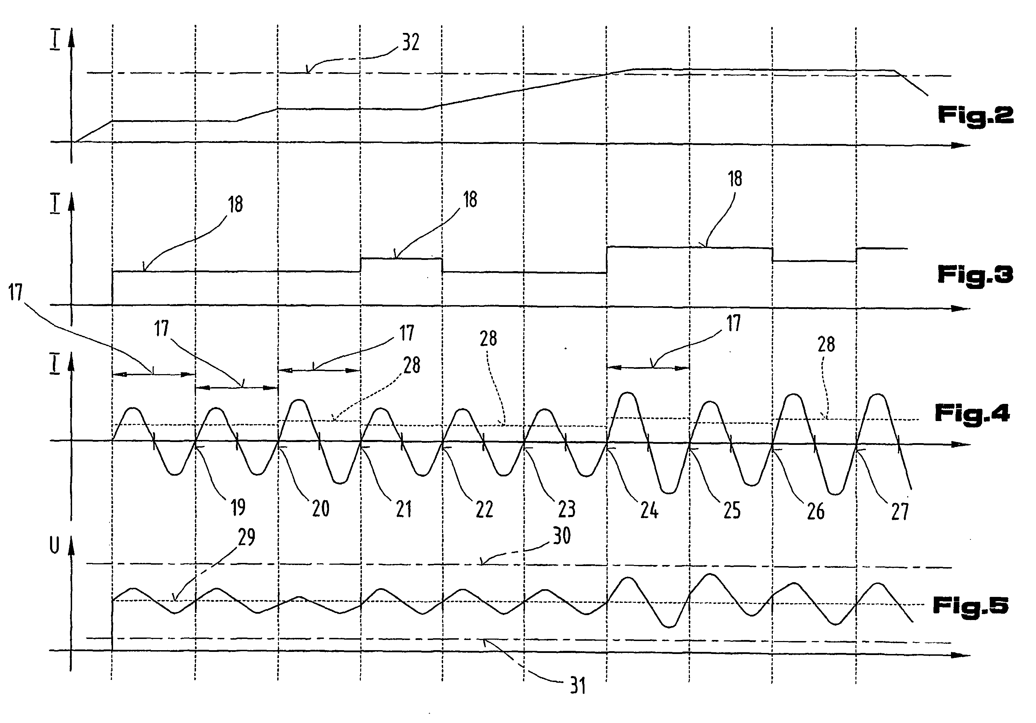

In den Fig. 1 bis 5 ist ein üblicher Aufbau, insbesondere ein Blockschaltbild, eines Wechselrichtersystems 1 mit einem Wechselrichter 2 (strichpunktiert umrandet) dargestellt. Da die einzelnen Komponenten bzw. Baugruppen und Funktionen des Wechselrichtersystems 1 bereits bekannt sind, wird auf diese nicht mehr näher eingegangen. In den Fig. 2 bis 5 sind unterschiedliche Kennlinien dargestellt, die das Funktionsprinzip des Wechselrichters 2 näher erläutern.

Der Wechselrichter 2 weist beispielsweise einen DC-DC-Wandler 3 (strichliert umrandet), einen Zwischenkreis 4 und einen DC-AC-Wandler 5 auf. Am DC-DC-Wandler 3 ist eine Energiequelle 6 bzw. ein Energieerzeuger angeschlossen, die beispielsweise durch ein oder mehrere parallel und/oder seriell zueinander geschaltete Solarmodule 7, die als String bezeichnet werden, oder einer Batterie (nicht dargestellt) gebildet ist. Der DC-AC-Wandler 5 ist mit seinen Ausgängen beispielsweise mit einem Wechselspannungsnetz 8 und/oder einem oder mehreren Verbrauchern, nicht dargestellt, wie beispielsweise einen Kühlschrank, ein Funkgerät usw., verbunden.

Der DC-DC-Wandler 3 wird beispielsweise zumindest aus einem Inverter 9, einem Transformator 10 und einem Gleichrichter 11 gebildet. Der Zwischenkreis 4 wird aus einem oder mehreren Kondensatoren aufgebaut. Damit eine gewünschte Wechselspannung für das Wechselspannungsnetz 8 oder den Verbraucher erzeugt werden kann, wird der DC-AC-Wandler 5 durch einen entsprechenden Inverter, der die Gleichspannung in eine Wechselspannung umwandelt, gebildet. Weitere Bauelemente bzw. Baugruppen, wie beispielsweise Filter, Glättungskondensatoren usw., sind im gezeigten Ausführungsbeispiel nicht dargestellt.

Wesentlich ist bei diesem bereits bekannten Aufbau das Regel- bzw. Steuerverfahren, mit dem der Wechselrichter 2 betrieben wird, wie dies nachstehend beschrieben ist.

Hierzu weist der Wechselrichter 2 einen Regler bzw. eine Steuervorrichtung 12, die beispielsweise durch einen Mikroprozessor, einen Mikrocontroller oder einen Rechner gebildet sein kann, auf. Über die Steuervorrichtung 12 kann eine entsprechende Steuerung der einzelnen Baugruppen, insbesondere der darin angeordneten Schaltvorrichtungen, vorgenommen werden. In der Steuervorrichtung 12 sind hierzu die einzelnen Regel- bzw. Steuerabläufe durch entsprechende Software-Programme und/oder Daten bzw. Kennlinien gespeichert. Weiters sind mit der Steuervorrichtung 12 Meßsystem 13 bis 16 zur Erfassung des Stromes und der Spannung an den verschiedensten Punkten des Wechselrichtersystems 1 angeordnet.

Bei der erfindungsgemäßen Lösung wird ein spezielles Steuer- bzw. Regelverfahren für den DC-DC-Wandler 3 des Wechselrichters 2 beschrieben. Dabei wird der DC-DC-Wandler 3 derart betrieben, daß dieser über eine voreinstellbare Zeitdauer 17 einen von der Steuervorrichtung 12 vorgegebenen konstanten Strom bzw. Stromwert 18 zur Energieversorgung des Zwischenkreises 4 bereitstellt. Die Zeitdauer 17, über die der DC-DC-Wandler 3 mit einem fix vorgegebenen Stromwert 18 betrieben wird, kann beispielsweise durch eine einstellbare Anzahl von Perioden bzw. Halbperioden oder einer beliebig festlegbaren Zeitspanne definiert werden. Bevorzugt wird die Zeitdauer 17 über die Anzahl voreinstellbarer Perioden bzw. Halbperioden definiert, wobei die Perioden bzw. Halbperioden von der erzeugten Wechselspannung des DC-AC-Wandlers 5 abhängig ist, d.h., daß je nach eingestellter Anzahl von Perioden bzw. Halbperioden von der Steuervorrichtung 12 eine Regelung bzw. Steuerung des Wechselrichters 2, insbesondere eine Veränderung zumindest eines Sollwertes, eingeleitet wird. Zwischenzeitlich, also innerhalb der Zeitdauer 17, wird lediglich für die bzw. von den einzelnen Komponenten bzw. Baugruppen eine Regelung der erfaßten Istwerte auf die vorgegebenen Sollwerte durchgeführt. Bei dem gezeigten Ausführungsbeispiel wurde die Einstellung der Zeitdauer 17 beispielsweise über die Perioden getroffen, wobei die Anzahl der voreingestellten Perioden bzw. Halbperioden "Eins" beträgt, also eine Periode bzw. zwei Halbperioden, wie dies in Fig. 4 ersichtlich ist.

Nach Ablauf der Zeitdauer 17 wird also von der Steuervorrichtung 12 eine Anpassung der Energielieferung, insbesondere des konstanten Stromflusses bzw. des Stromwertes 18, vom DC-DC-Wandler 3 in den Zwischenkreis 4 an die vom Zwischenkreis 4 durch den DC-AC-Wandler 5 entnommene Energie durchgeführt, wie dies zu den Zeitpunkten 19 bis 27 ersichtlich ist. Hierzu wird von der Steuervorrichtung 12 ein Mittelwert 28, insbesondere ein Strommittelwert, wie strichliert in Fig. 4 schematisch eingetragen, der vom DC-AC-Wandler aus dem Zwischenkreis 4 während der Zeitdauer 17 bzw. der eingestellten Anzahl von Perioden bzw. Halbperioden 5 entnommenen Energiemenge ermittelt. Dieser Mittelwert 28 wird anschließend für die nächste Zeitdauer 17 als Sollwert für den Stromfluß bzw. für den Stromwert 18 des DC-DC-Wandlers 3 herangezogen. Damit kann gesagt werden, daß die strichliert gezeichnete Linie für den Mittelwert 28 in Fig. 4 in etwa der Kennlinie des Ausgangsstromes für den DC-DC-Wandler 3 in Fig. 3 entspricht, wobei die Kennlinie in Fig. 3 um die Zeitdauer 17 verschoben ist.

Somit wird also jeweils nach Ablauf der Zeitdauer 17 für die nächste Zeitdauer 17 ein neuer Sollwert, also ein neuer Stromwert 18, festgelegt, d.h., daß eine Leistungsanpassung der Energielieferung in den Zwischenkreis 4 an die zuletzt entnommene Energiemenge, also der entnommenen Energiemenge der gerade abgelaufenen Zeitdauer 17, durchgeführt wird. Eine derartige Anpassung des Stromwertes 18 ist speziell bei dem dargestellten Ausführungsbeispiel in Fig. 3 zu den Zeitpunkten 21 und 26 ersichtlich, da bei diesen Zeitpunkten 21 und 26 in der vorhergehenden Zeitdauer 17 eine Veränderung der Energieentnahme des DC-AC-Wandlers 5 eingetreten ist und somit eine entsprechende Anpassung des Sollwertes bzw. des Stromwertes 18 für den DC-DC-Wandler 3 notwendig wurde.

Aufgrund der verzögerten Anpassung wird jedoch erreicht, daß von dem DC-DC-Wandler 3 bei annähernd konstanten Stromfluß so viel Energie in den Zwischenkreis 4 geliefert wird, daß ein Zwischenkreismittelwert 29, wie mit strichlierten Linien in Fig. 5 gezeigt, insbesondere der Mittelwert der Zwischenkreisspannung, konstant gehalten wird, wobei die Zwischenkreisspannung im Zwischenkreis 4 durch die konstante Energieübertragung bzw. durch die annähernd konstante Stromlieferung des DC-DC-Wandlers 3 von der Energiequelle 6 entsprechend der Energieentnahme des DC-AC-Wandlers 5 schwankt, wie dies in Fig. 5 schematisch dargestellt ist.

Durch diese verzögerte Energieanpassung wird es überhaupt erst ermöglicht, daß ein konstanter Stromfluß mit einem definierten Sollwert bzw. Stromwert 18 über die vorgegebene Zeitdauer 17 durchgeführt werden kann und nicht, wie aus dem Stand der Technik bekannt, eine ständige Energieanpassung und somit Regelung durchgeführt werden muß. Damit wird der ständige Regelaufwand für die Komponenten bzw. Baugruppen des Wechselrichters 2 wesentlich reduziert und es können somit mehrere Faktoren für die Optimierung der Energielieferung berücksichtigt werden. Durch die Verringerung des Regelaufwandes kann die Steuervorrichtung 12 durch kostengünstige Komponenten, bei denen die Schnelligkeit bzw. die Taktfrequenz gering ist, aufgebaut werden.

Selbstverständlich ist es möglich, daß der DC-DC-Wandler 3 und der DC-AC-Wandler 5 eine eigene unabhängige Steuervorrichtung bzw. einen Regler aufweisen können, der mit der Steuervorrichtung 12 zusammengeschaltet wird, oder daß die Steuervorrichtung 12 entfallen kann und die Regelung bzw. Steuerung jeweils von den zugehörigen Reglern durchgeführt wird.

Um eine optimale Leistungsanpassung durchführen zu können, ist es auch möglich, daß der ermittelte Mittelwert 28 von der Steuervorrichtung 12 durch hinterlegte oder ermittelten Daten bzw. Werte oder Parameter korrigiert oder anderwertig ermittelt werden kann. Dabei kann für die Korrektur des Mittelwertes 28 oder für die Festlegung des Mittelwertes 28 von der Steuervorrichtung 12 ein Energiemengenwert ermittelt werden, der durch das Verhältnis der gelieferten Energiemenge, gemäß Fig. 3, zur entnommenen Energiemenge bzw. Höhe des Stromes aus dem Zwischenkreis 4, gemäß Fig. 4, während einer Zeitdauer 17 bzw. der eingestellten Anzahl von Perioden bzw. Halbperioden festgelegt wird.

Da die Regelung bzw. Steuerung des Wechselrichters 2, insbesondere des DC-DC-Wandlers 3, während des Ablaufes der Zeitdauer 17 unabhängig von der vom DC-AC-Wandler 5 entnommenen Energie erfolgt, muß sichergestellt werden, daß immer ausreichend Energie im Zwischenkreis 4 vorhanden ist, da es ansonsten zu einem Stillstand bzw. einem undefinierbaren Betrieb des Wechselrichters 2 kommen kann. Dies kann insofern gelöst werden, indem im Zwischenkreis 4 eine Überwachung der Zwischenkreisspannung durchgeführt wird. Dabei wird bei Absinken der Zwischenkreisspannung unter zumindest einem voreinstellbaren Referenzwert 30, 31, wie mit strichpunktierten Linien in Fig. 5 dargestellt, die Energielieferung vom DC-AC-Wandler 5 in das Wechselspannungsnetz 8 oder an den Verbraucher reduziert, wobei beim Überschreiten des Referenzwertes 30, 31 durch die Zwischenkreisspannung die Energielieferung vom DC-AC-Wandler 5 in das Wechselspannungsnetz 8 erhöht wird. Diese Regelung bzw. Steuerung wird dabei bevorzugt unabhängig der eingestellten Zeitdauer 17, also zu jedem beliebigen Zeitpunkt durchgeführt, so daß eine möglichst schnelle Anpassung des Energieflusses vorgenommen werden kann. Selbstverständlich ist es jedoch auch möglich, diese Regelung bzw. Steuerung synchron mit der Zeitdauer 17, also nach jeder Zeitdauer 17, durchzuführen.

Damit ein sicherer Betrieb des Wechselrichtersystems 1 gewährleistet werden kann, wird von der Steuervorrichtung 12 nach Ablauf der Zeitdauer 17 bzw. nach einer Periode bzw. Halbperiode oder der festgelegten Anzahl von Perioden bzw. Halbperioden ein Zwischenkreismittelwert 29 der Energiemenge im Zwischenkreis 4 ermittelt, so daß eine ständige Überwachung und Anpassung des Zwischenkreises 4 möglich ist und somit bei zu hoher oder zu geringer Energieentnahme aus dem Zwischenkreis 4 entsprechend reagiert werden kann. Dabei wird der Zwischenkreismittelwert 29 von der Steuervorrichtung 12 mit hinterlegten, bevorzugt einstellbaren Referenzwerten 30, 31, die beispielsweise auch unabhängig von den Referenzwerten 30, 31 für die Zwischenkreisspannung einstellbar sind, verglichen, wobei beispielsweise bei Überschreiten eines Referenzwertes 30, 31 die Ausgangsleistung des DC-AC-Wandlers 5 erhöht wird und bei Unterschreiten eines Referenzwertes 30, 31 die Ausgangsleistung des DC-AC-Wandlers 5 verringert wird.

Somit wird auf alle Fälle sichergestellt, daß nach Ablauf der Zeitdauer 17 aufgrund der zur Verfügung stehenden Energiemenge im Zwischenkreis 4 die Ausgangsleistung angepaßt werden kann und somit entsprechende Verbraucher zu- oder abgeschaltet bzw. betrieben werden können bzw. mehr oder weniger Energie in das Wechselspannungsnetz 8 geliefert werden kann.

Es ist selbstverständlich auch möglich, daß nicht nur der DC-AC-Wandler 5 an den Zustand des Zwischenkreises 4 angepaßt werden kann, sondern auch der DC-DC-Wandler 3 entsprechend gesteuert wird. Hierzu wird bei Unterschreiten des definierten Referenzwertes 30, 31, der beispielsweise auch unabhängig von den Referenzwerten 30, 31 für den DC-AC-Wandler 5 einstellbar ist, durch einen Zwischenkreismittelwert 29 der Sollwert bzw. der Stromwert 18 für den DC-DC-Wandler 3 bei ausreichend zur Verfügung stehender Energiemenge von der Energiequelle 6 erhöht, d.h., daß von der Steuervorrichtung 12 bei Unterschreiten des Referenzwertes 30, 31 überprüft wird, wieviel Energie von der Energiequelle 6 zur Verfügung steht, um eine entsprechende Erhöhung des Sollwertes durchzuführen. Steht zu wenig Energie zur Verfügung, so wird anstelle der Erhöhung des Sollwertes die Ausgangsleistung des DC-AC-Wandlers 5 verringert, um wiederum genügend Energie in den Zwischenkreis 4 zu liefern.

Somit wird von der Steuervorrichtung 12 die von der Energiequelle 6 zur Verfügung gestellte Energiemenge überwacht. Dabei ist es möglich, daß aufgrund der erzeugten bzw. gelieferten Energiemenge die Ausgangsleistung des DC-AC-Wandlers 5 angepaßt wird. Dies kann derartig erfolgen, daß bei Überschreiten des zumindest einen Energiekennwertes 32, gemäß Fig. 2, durch die erzeugte Energie bzw. der Spannung und des Stromes von der Energiequelle 6 die Ausgangsleistung des DC-AC-Wandlers 5, wie zum Zeitpunkt 24 ersichtlich, angehoben wird bzw. bei Unterschreiten reduziert wird. Die Anpassung des DC-DC-Wandlers 3 muß zu diesem Zeitpunkt 24 noch nicht erfolgen, da diese nach Ablauf der Zeitdauer 17 durch einen veränderten Mittelwert 28 vorgenommen wird. Es ist jedoch möglich, daß aufgrund einer unvorhergesehenen Erhöhung der Ausgangsleistung eine sofortige Anpassung des Sollwertes für den DC-DC-Wandler 3 vorgenommen werden kann.

Weiters kann das Wechselrichtersystem 1 derart betrieben werden, daß sowohl eine Lieferung in das Wechselspannungsnetz 8 und/oder an einen oder mehrere Verbraucher vorgenommen werden kann, wobei von der Steuervorrichtung 12 aufgrund der zur Verfügung stehenden Energiemenge festgelegt wird, ob diese an einen oder mehrere angeschlossene Verbraucher und/oder an das Wechselspannungsnetz 8 geliefert wird. Hierzu kann vom Betreiber eine entsprechende prioritätenabhängige Einstellung vorgenommen werden, so daß von der Steuervorrichtung 12 aufgrund der zur Verfügung stehenden Energiemenge ein An- bzw. Abschalten der angeschlossenen Verbraucher selbständig durchgeführt werden kann, wie dies in Fig. 4 dargestellt ist.

Grundsätzlich kann also gesagt werden, daß der DC-DC-Wandler 3 derart geregelt wird, daß während einer einstellbaren Zeitdauer 17 unabhängig von der Energieentnahme aus dem Zwischenkreis 4 einen annähernd konstanten Stromfluß vom Eingang des DC-DC-Wandlers 3, also von der Energiequelle 6, zum Ausgang des DC-DC-Wandlers 3, also in den Zwischenkreis 4, zuführt, wogegen der DC-AC-Wandler 5 innerhalb dieser festgelegten Zeitdauer 17 Energie aus dem Zwischenkreis 4 zum Einspeisen in das Wechselspannungsnetz 8 und/oder zur Lieferung an einen Verbraucher entnimmt, wobei der Regler bzw. die Steuervorrichtung 12 des DC-DC-Wandlers 3, insbesondere ein Sollwert bzw. ein Stromwert 18 für die Regelung des Stromflusses, jeweils nach Ablauf der festgelegten Zeitdauer 17 neu einstellt.

Um eine optimale Ausnutzung des Wechselrichtersystems 1 zu erreichen, wird von der Steuervorrichtung 12 das Wechselrichtersystem 1 derart geregelt, daß die Energielieferung des DC-AC-Wandlers 5 in Abhängigkeit der von der Energiequelle 6 erzeugten Energiemenge bzw. Leistung festgelegt wird, d.h., daß entsprechend der zur Verfügung stehenden Energiemenge aus der Energiequelle 6 die Ausgangsleistung des DC-AC-Wandlers 5 festgelegt wird.

Der Ordnung halber sei abschließend darauf hingewiesen, daß zum besseren Verständnis des Aufbaus des Wechselrichtersystems dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2, 3, 4, 5 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Wechselrichtersystem
- 2: Wechselrichter
- 3: DC-DC-Wandler
- 4: Zwischenkreis
- 5: DC-AC-Wandler

- 6: Energiequelle
- 7: Solarmodul
- 8: Wechselspannungsnetz
- 9: Inverter
- 10: Transformator

- 11: Gleichrichter
- 12: Steuervorrichtung
- 13: Meßsystem
- 14: Meßsystem
- 15: Meßsystem

- 16: Meßsystem
- 17: Zeitdauer
- 18: Stromwert
- 19: Zeitpunkt
- 20: Zeitpunkt

- 21: Zeitpunkt
- 22: Zeitpunkt
- 23: Zeitpunkt
- 24: Zeitpunkt
- 25: Zeitpunkt

- 26: Zeitpunkt
- 27: Zeitpunkt
- 28: Mittelwert
- 29: Zwischenkreismittelwert
- 30: Referenzwert

- 31: Referenzwert
- 32: Energiekennwert

## Patentansprüche

1. Verfahren zum Regeln eines Wechselrichtersystems, bei dem über eine Energiequelle, insbesondere über zumindest ein Solarmodul oder über eine Batterie, elektrische Energie erzeugt und/oder geliefert wird, die von zumindest einem DC-DC-Wandler (3) in einen Zwischenkreis (4) transferiert und von diesem über einen DC-AC-Wandler (5) in ein Wechselspannungsnetz (8) eingespeist und/oder einem Verbraucher zugeführt wird, **dadurch gekennzeichnet, daß** der DC-DC-Wandler (3) derart geregelt wird, daß sich während einer einstellbaren Zeitdauer (17) unabhängig von der Energieentnahme aus dem Zwischenkreis (4) ein annähernd konstanter Stromfluß vom Eingang des DC-DC-Wandlers (3), also von der Energiequelle, zum Ausgang des DC-DC-Wandlers, also in den Zwischenkreis (4), ergibt, wogegen der DC-AC-Wandler (5) innerhalb dieser Zeitdauer (17) Energie aus dem Zwischenkreis (4) zum Einspeisen in das Wechselspannungsnetz (8) und/oder zur Lieferung an den Verbraucher entnimmt, wobei ein Regler bzw. eine Steuervorrichtung (12) des DC-DC-Wandlers (3), insbesondere ein Sollwert für die Regelung des Stromflusses durch den DC-DC-Wandler (3), jeweils nach Ablauf der Zeitdauer neu eingestellt wird.

2. Verfahren nach Anspruch 1, **dadurch gekennzeichnet, daß** die Zeitdauer (17) beispielsweise durch eine einstellbare Anzahl von Perioden bzw. Halbperioden oder einer beliebig festlegbaren Zeitspanne definiert wird.

3. Verfahren nach Anspruch 1 oder 2, **dadurch gekennzeichnet, daß** von dem DC-DC-Wandler (3) bei annähernd konstantem Stromfluß so viel Energie in den Zwischenkreis (4) geliefert wird, daß ein Zwischenkreismittelwert des Zwischenkreises (4), insbesondere ein Mittelwert der Zwischenkreisspannung, konstant gehalten wird.

4. Verfahren nach einem oder mehreren der vorhergehenden Ansprüche, **dadurch gekennzeichnet, daß** eine Anpassung der Energielieferung, insbesondere des Stromes, vom DC-DC-Wandler (3) in den Zwischenkreis (4) an die vom Zwischenkreis (4) entnommene Energiemenge durch den DC-AC-Wandler (5) jeweils nach Ablauf einer Zeitdauer bzw. nach Ablauf der eingestellten Anzahl von Perioden bzw. Halbperioden durchgeführt wird.

5. Verfahren nach einem oder mehreren der vorhergehenden Ansprüche, **dadurch gekennzeichnet, daß** für die Regelung des DC-DC-Wandlers (3) von der Steuervorrichtung (12) ein Mittelwert der vom DC-AC-Wandler (5) entnommenen Energiemenge aus dem Zwischenkreis (4) während der eingestellten Anzahl der Perioden bzw. Halbperioden ermittelt wird und anschließend für die nächste Anzahl von Perioden bzw. Halbperioden der ermittelte Mittelwert als Sollwert für den Stromfluß des DC-DC-Wandlers (3) herangezogen wird.

6. Verfahren nach einem oder mehreren der vorhergehenden Ansprüche, **dadurch gekennzeichnet, daß** der ermittelte Mittelwert von der Steuervorrichtung (12) durch hinterlegte oder ermittelte Daten bzw. Werte oder Parameter korrigiert wird.

7. Verfahren nach einem oder mehreren der vorhergehenden Ansprüche, **dadurch gekennzeichnet, daß** für die Korrektur des Mittelwertes oder für die Festlegung des Mittelwertes von der Steuervorrichtung (12) ein Energiemengenwert ermittelt wird, der durch das Verhältnis der gelieferten Energiemenge zur entnommenen Energiemenge in bzw. aus dem Zwischenkreis (4) während der festgelegten Anzahl von Perioden bzw. Halbperioden festgelegt wird.

8. Verfahren nach einem oder mehreren der vorhergehenden Ansprüche, **dadurch gekennzeichnet, daß** die Zwischenkreisspannung im Zwischenkreis (4) durch die konstante Energieübertragung bzw. durch die annähernd konstante Stromlieferung des DC-DC-Wandlers (3) von einer Energiequelle (6) entsprechend der Energieentnahme des DC-AC-Wandlers (5) schwankt.

9. Verfahren nach einem oder mehreren der vorhergehenden Ansprüche, **dadurch gekennzeichnet; daß** die Energielieferung des DC-AC-Wandlers (5) in Abhängigkeit der von der Energiequelle (6) erzeugten Energiemenge bzw. Leistung festgelegt wird.

10. Verfahren nach einem oder mehreren der vorhergehenden Ansprüche, **dadurch gekennzeichnet, daß** bei Absinken der Zwischenkreisspannung unter einen voreinstellbaren Referenzwert die Energielieferung in das Wechselspannungsnetz und/oder an den Verbraucher vom DC-AC-Wandler (5) reduziert wird.

11. Verfahren nach einem oder mehreren der vorhergehenden Ansprüche, **dadurch gekennzeichnet, daß** bei Überschreiten zumindest eines Referenzwertes durch die Zwischenkreisspannung die Energielieferung in das Wechselspannungsnetz und/oder an den Verbraucher vom DC-AC-Wandler (5) erhöht wird.

12. Verfahren nach einem oder mehreren der vorhergehenden Ansprüche, **dadurch gekennzeichnet, daß** von der Steuervorrichtung nach einer Periode bzw. einer Halbperiode oder der festgelegten Anzahl von Perioden bzw. Halbperioden ein Zwischenkreismittelwert der Energiemenge im Zwischenkreis (4) ermittelt wird.

13. Verfahren nach einem oder mehreren der vorhergehenden Ansprüche, **dadurch gekennzeichnet, daß** der Zwischenkreismittelwert von der Steuervorrichtung (12) mit hinterlegten, bevorzugt einstellbaren Referenzwerten verglichen wird, wobei beispielsweise bei Überschreiten eines Referenzwertes die Ausgangsleistung des DC-AC-Wandlers (5) erhöht wird und bei Unterschreiten eines Referenzwertes die Ausgangsleistung des DC-AC-Wandlers (5) verringert wird.

14. Verfahren nach einem oder mehreren der vorhergehenden Ansprüche, **dadurch gekennzeichnet, daß** bei Unterschreiten eines definierten Referenzwertes durch den Zwischenkreismittelwert der Sollwert für den DC-DC-Wandler (3), insbesondere der Sollwert für den konstanten Stromfluß, bei ausreichend zur Verfügung stehender Energiemenge von der Energiequelle (6) erhöht wird.

15. Verfahren nach einem oder mehreren der vorhergehenden Ansprüche, **dadurch gekennzeichnet, daß** die von der Energiequelle (6) zur Verfügung gestellte Energiemenge überwacht wird.

16. Verfahren nach einem oder mehreren der vorhergehenden Ansprüche, **dadurch gekennzeichnet, daß** von der Steuervorrichtung (12) aufgrund der zur Verfügung stehenden Energiemenge festgelegt wird, ob diese an einen oder mehrere angeschlossene Verbraucher oder in das Wechselspannungsnetz (8) geliefert wird.

17. Verfahren nach einem oder mehreren der vorhergehenden Ansprüche, **dadurch gekennzeichnet, daß** von der Steuervorrichtung (12) aufgrund der zur Verfügung stehenden Energiemenge ein An- bzw. Abschalten der angeschlossenen Verbraucher selbständig durchgeführt wird.

18. Wechselrichter, der zumindest aus einem DC-DC-Wandler (3), einem Zwischenkreis (4) und einem DC-AC-Wandler (5) besteht, an den eine Energiequelle (6) bzw. ein Energieerzeuger (6), insbesondere ein Solarmodul (7), und/oder eine Batterie anschließbar ist und dieser mit einem Wechselspannungsnetz (8) und/oder einem oder mehreren Verbrauchern verbindbar ist, **dadurch gekennzeichnet, daß** der DC-DC-Wandler (3) zur Lieferung eines konstanten Stromflusses über eine voreinstellbare Zeitdauer (17) unabhängig der vom Zwischenkreis (4) über den DC-AC-Wandler (5) entnommenen Energie ausgebildet ist und ein Sollwert bzw. ein Stromwert des DC-DC-Wandlers (3) nach Ablauf der voreingestellten Zeitdauer (17) an die vom DC-AC-Wandler (5) entnommene Energie aus dem Zwischenkreis (4) anpaßbar ist.

## Claims

1. Method of regulating a rectifier inverter system, whereby electrical power is generated and/or supplied via a power source, in particular via at least one solar module or via a battery, which is transmitted from at least one d.c.-to-d.c. converter (3) to an intermediate circuit (4), from where it is fed via a d.c.-to-a.c. converter (5) to an alternating voltage supply (8) and/or delivered to a consumer, **characterised in that** the d.c.-to-d.c. converter (3) is regulated in such a way that a virtually constant current flow is applied from the input of the d.c.-to-d.c. converter (3), in other words from the power source, to the output of the d.c.-to-d.c. converter, in other words the intermediate circuit (4), during a pre-settable period (17) irrespective of the power drawn off from the intermediate circuit (4), whereas during this same period (17) the d.c.-to-a.c. converter (5) draws off power from the intermediate circuit (4) to feed it to the alternating voltage supply (8) or deliver it to the consumer, and a controller or a control system (12) of the d.c.-to-d.c. converter (3), in particular a desired value for regulating the current flow through the d.c.-to-d.c. converter (3), is re-set whenever the period elapses.

2. Method as claimed in claim 1, **characterised in that** the period (17) is defined by a variable number of periods or half-periods or a period set in any other manner.

3. Method as claimed in claim 1 or 2, **characterised in that** the d.c.-to-d.c. converter (3) supplies so much power to the intermediate circuit (4) at a virtually constant flow that an intermediate circuit mean value of the intermediate circuit (4), in particular a mean value of the intermediate circuit voltage, is kept constant.

4. Method as claimed in one or more of the preceding claims, **characterised in that** the power supply, in particular the current, from the d.c.-to-d.c. converter (3) to the intermediate circuit (4), is adapted to the amount of power drawn off from the intermediate circuit (4) by the d.c.-to-a.c. converter (5) whenever a period elapses or when the set number of periods or half-periods has elapsed.

5. Method as claimed in one or more of the preceding claims, **characterised in that** in order to regulate the d.c.-to-d.c. converter (3), the control system (12) determines a mean value for the amount of power drawn off from the intermediate circuit (4) by the d.c.-to-a.c. converter (5) during the set number of periods or half-periods and the resultant mean value is applied as the desired value for the current flow of the d.c.-to-d.c. converter (3) for the next number of periods or half-periods.

6. Method as claimed in one or more of the preceding claims, **characterised in that** the mean value determined by the control system (12) is corrected by stored or detected data and values or parameters.

7. Method as claimed in one or more of the preceding claims, **characterised in that** for the purposes of correcting the mean value or fixing the mean value, the control system (12) determines a value representing an amount of power based on the ratio of the amount of power supplied to the amount of power drawn off, to or from the intermediate circuit (4), during the fixed number of periods or half-periods.

8. Method as claimed in one or more of the preceding claims, **characterised in that** the intermediate circuit voltage in the intermediate circuit (4) fluctuates from a power source (6) depending on the power drawn off by the d.c.-to-a.c. converter (5) as a result of the constant power transfer or the virtually constant current supply to the d.c.-to-d.c. converter (3).

9. Method as claimed in one or more of the preceding claims, **characterised in that** the power supply of the d.c.-to-a.c. converter (5) is fixed depending on the amount of power or output generated by the power source (6).

10. Method as claimed in one or more of the preceding claims, **characterised in that** if the intermediate circuit voltage falls below a pre-settable reference value, the power supply to the alternating voltage supply and/or the consumer from the d.c.-to-a.c. converter (5) is reduced.

11. Method as claimed in one or more of the preceding claims, **characterised in that** if at least one reference value is exceeded by the intermediate circuit voltage, the power supply to the alternating voltage supply and/or to the consumer from the d.c.-to-a.c. converter (5) is increased.

12. Method as claimed in one or more of the preceding claims, **characterised in that** when a period or a half-period or the fixed number of periods or half-periods has elapsed, the control system determines an intermediate circuit mean value for the amount of power in the intermediate circuit (4).

13. Method as claimed in one or more of the preceding claims, **characterised in that** the control system (12) compares the intermediate circuit mean value with the stored, preferably adjustable reference values and if a reference value is exceeded, the output power of the d.c.-to-a.c. converter (5) is increased and if there is a drop below a reference value the output power of the d.c.-to-a.c. converter (5) is reduced.

14. Method as claimed in one or more of the preceding claims, **characterised in that** if the intermediate circuit mean value falls below a defined reference value, the desired value for the d.c.-to-d.c. converter (3), in particular the desired value for the constant current flow, is increased if there is a sufficient amount of power available in the power source (6).

15. Method as claimed in one or more of the preceding claims, **characterised in that** the amount of power available in the power source (6) is monitored.

16. Method as claimed in one or more of the preceding claims, **characterised in that** depending on the amount of power available, the control system (12) determines whether it should be delivered to one or more connected consumers or to the alternating voltage supply (8).

17. Method as claimed in one or more of the preceding claims, **characterised in that** the control system (12) automatically switches the connected consumer on or off depending on the amount of power available.

18. Rectifier inverter at least consisting of one d.c.-to-d.c. converter (3), an intermediate circuit (4) and a d.c.-to-a.c. converter (5), to which a power source (6) or a power generator (6), in particular a solar module (7) and/or a battery, can be connected and the latter can be connected to an alternating voltage supply (8) and/or one or more consumers, **characterised in that** the d.c.-to-d.c. converter (3) is configured so as to supply a constant current flow for a pre-settable period (17) irrespective of the power drawn off from the intermediate circuit (4) by the d.c.-to-a.c. converter (5) and, when the pre-set period (17) has elapsed, a desired value or a desired current of the d.c.-to-d.c. converter (3) can be adapted to the power drawn off from the intermediate circuit (4) by the d.c.-to-a.c. converter (5).

## Revendications

1. Procédé servant à régler un système d'inverseur, dans lequel par une source d'énergie, en particulier par au moins un module solaire ou par une batterie, de l'énergie électrique est produite et/ou fournie, qui est transférée par au moins un convertisseur cc-cc (3) dans un circuit intermédiaire (4) et, de celui-ci, alimente par un convertisseur cc-ca (5) un réseau de tension alternative (8) et/ou est amenée à un utilisateur, **caractérisé en ce que** le convertisseur cc-cc (3) est réglé de façon à obtenir pendant une durée réglable (17), indépendamment du prélèvement de l'énergie du circuit intermédiaire (4), un flux de courant approximativement constant de l'entrée du convertisseur cc-cc (3), donc de la source d'énergie, à la sortie du convertisseur cc-ca, donc dans le circuit intermédiaire (4), tandis que le convertisseur cc-ca (5), pendant cette durée (17), prélève de l'énergie du circuit intermédiaire (4) pour alimenter le réseau de tension alternative (8) et/ou pour la fournir à l'utilisateur, où un régulateur respectivement un dispositif de commande (12) du convertisseur cc-cc (3), en particulier une valeur de consigne pour la régulation du flux de courant à travers le convertisseur cc-cc (3) est réglé nouvellement à chaque fois après l'écoulement de la durée de temps.

2. Procédé selon la revendication 1, **caractérisé en ce que** la durée (17) est définie par exemple par un nombre réglable de périodes respectivement de demi-périodes ou d'une durée pouvant être fixée sélectivement.

3. Procédé selon la revendication 1 ou 2, **caractérisé en ce que** le convertisseur cc-cc (3), dans le cas d'un flux de courant approximativement constant, fournit suffisamment d'énergie au circuit intermédiaire (4) qu'une valeur moyenne du circuit intermédiaire (4), en particulier une valeur moyenne de la tension du circuit intermédiaire, reste à un niveau constant.

4. Procédé selon l'une ou plusieurs des revendications précédentes, **caractérisé en ce qu'**une adaptation de la fourniture d'énergie, en particulier du courant, est exécutée par le convertisseur cc-cc (3) dans le circuit intermédiaire (4) à la quantité d'énergie prélevée du circuit intermédiaire (4) par le convertisseur cc-ca (5) à chaque fois après l'écoulement d'une durée respectivement après l'écoulement du nombre réglé de périodes respectivement de demi-périodes.

5. Procédé selon l'une ou plusieurs des revendications précédentes, **caractérisé en ce qu'**il est déterminé pour le réglage du convertisseur cc-cc (3) par le dispositif de commande (12) une valeur moyenne de la quantité d'énergie prélevée par le convertisseur cc-ca (5) du circuit intermédiaire (4) pendant le nombre réglé des périodes respectivement des demi-périodes, et que la valeur moyenne déterminée est utilisée ensuite pour le prochain nombre de périodes respectivement de demi-périodes, comme valeur de consigne pour le flux de courant du convertisseur cc-cc (3).

6. Procédé selon l'une ou plusieurs des revendications précédentes, **caractérisé en ce que** la valeur moyenne déterminée est corrigée par le dispositif de commande (12) par des données respectivement valeurs ou paramètres stockés ou déterminés.

7. Procédé selon l'une ou plusieurs des revendications précédentes, **caractérisé en ce que**, pour la correction de la valeur moyenne ou pour la fixation de la valeur moyenne, le dispositif de commande (12) détermine une valeur de quantité d'énergie, qui est déterminée par le rapport de la quantité d'énergie fournie à la quantité d'énergie prélevée dans respectivement du circuit intermédiaire (4) pendant le nombre fixé de périodes respectivement de demi-périodes.

8. Procédé selon l'une ou plusieurs des revendications précédentes, **caractérisé en ce que** la tension du circuit intermédiaire (4) oscille en raison de la transmission d'énergie constante respectivement en raison de la fourniture de courant approximativement constante du convertisseur cc-cc (3) d'une source d'énergie (6) en fonction du prélèvement d'énergie du convertisseur cc-ca (5).

9. Procédé selon l'une ou plusieurs des revendications précédentes, **caractérisé en ce que** la fourniture d'énergie du convertisseur cc-ca (5) est fixée en fonction de la quantité d'énergie respectivement puissance produite par la source d'énergie (6).

10. Procédé selon l'une ou plusieurs des revendications précédentes, **caractérisé en ce que** lors d'une diminution de la tension du circuit intermédiaire en dessous d'une valeur de référence préréglable, la fourniture d'énergie dans le réseau de tension alternative et/ou à l'utilisateur est réduite par le convertisseur cc-ca (5).

11. Procédé selon l'une ou plusieurs des revendications précédentes, **caractérisé en ce que** lors du dépassement d'au moins une valeur de référence par la tension du circuit intermédiaire, la fourniture d'énergie dans le réseau de tension alternative et/ou à l'utilisateur est augmentée par le convertisseur cc-ca (5).

12. Procédé selon l'une ou plusieurs des revendications précédentes, **caractérisé en ce qu'**il est déterminé par le dispositif de commande après une période respectivement une demi-période ou le nombre fixé de périodes respectivement de demi-périodes, une valeur moyenne de circuit intermédiaire de la quantité d'énergie dans le circuit intermédiaire (4).

13. Procédé selon l'une ou plusieurs des revendications précédentes, **caractérisé en ce que** la valeur moyenne du circuit intermédiaire est comparée par le dispositif de commande (12) à des valeurs de références stockées, de préférence réglables, où par exemple lors du dépassement d'une valeur de référence, la puissance de sortie du convertisseur cc-ca (5) est augmentée et, lors de la non-atteinte d'une valeur de référence, la puissance de sortie du convertisseur cc-ca (5) est diminuée.

14. Procédé selon l'une ou plusieurs des revendications précédentes, **caractérisé en ce que** lors de la non-atteinte d'une valeur de référence définie, par la valeur moyenne du circuit intermédiaire, la valeur de consigne pour le convertisseur cc-cc (3) est augmentée, en particulier la valeur de consigne pour le flux de courant constant, lors d'une quantité d'énergie disponible suffisante par la source d'énergie (6).

15. Procédé selon l'une ou plusieurs des revendications précédentes, **caractérisé en ce que** la quantité d'énergie mise à disposition par la source d'énergie (6) est surveillée.

16. Procédé selon l'une ou plusieurs des revendications précédentes, **caractérisé en ce qu'**il est déterminé par le dispositif de commande (12) sur la base de la quantité d'énergie disponible si celle-ci est fournie à un ou plusieurs utilisateurs connectés ou au réseau de tension alternative (8).

17. Procédé selon l'une ou plusieurs des revendications précédentes, **caractérisé en ce qu'**une mise en respectivement hors service des utilisateurs connectés est effectuée automatiquement par le dispositif de commande (12) sur la base de la quantité d'énergie disponible.

18. Inverseur, qui est constitué d'au moins un convertisseur cc-cc (3), d'un circuit intermédiaire (4) et d'un convertisseur cc-ca (5), auquel peut être connectée une source d'énergie (6) respectivement un générateur d'énergie (6), en particulier un module solaire (7) et/ou une batterie, et celui-ci peut être connecté à un réseau de tension alternative (8) et/ou à un ou plusieurs utilisateurs, **caractérisé en ce que** le convertisseur cc-cc (3), pour fournir un flux de courant constant, est réalisé sur une durée préréglable (17) indépendamment de l'énergie prélevée par le circuit intermédiaire (4) par le convertisseur cc-ca (5), et qu'une valeur de consigne respectivement valeur de courant du convertisseur cc-cc (3), après l'écoulement de la durée préréglée (17), peut être adaptée à l'énergie du circuit intermédiaire (4) prélevée du convertisseur cc-ca (5).
